# EUROPÄISCHE PATENTSCHRIFT

(11) **EP 1 438 216 B1**
(45) Veröffentlichungstag und Bekanntmachung des Hinweises auf die Patenterteilung: **05.07.2006**
(21) Anmeldenummer: 02777180.7
(22) Anmeldetag: 23.09.2002
(51) Int. Cl.: B60R 21/01

(54) **VERFAHREN ZUM AUSLÖSEN EINES FAHRZEUGINSASSEN-RÜCKHALTEMITTELS**
METHOD FOR TRIGGERING A VEHICLE OCCUPANT RESTRAINT MEANS
PROCEDE DE DECLENCHEMENT D'UN MOYEN DE RETENUE DES OCCUPANTS D'UN VEHICULE

(30) Priorität: 25.10.2001 DE 10152749
(43) Veröffentlichungstag der Anmeldung: 21.07.2004
(73) Patentinhaber: Bayerische Motoren Werke Aktiengesellschaft, 80809 München (DE)
(72) Erfinder: LINK, Andrea, 81549 München (DE); WATZKA, Willibald, 86551 Aichach (DE); URBAHN, Jan, 80797 München (DE)
(86) Internationale Anmeldenummer: PCT/EP2002/010659
(87) Internationale Veröffentlichungsnummer: WO 2003/035434

(56) Entgegenhaltungen:
- EP-A- 0 342 401
- EP-A- 1 409 298
- DE-A- 3 716 168
- GB-A- 2 347 542
- US-A- 5 202 831
- US-A- 6 070 113

## Beschreibung

Die Erfindung bezieht sich auf ein Verfahren zum Auslösen eines Fahrzeuginsassen-Rückhaltemittels, bei dem ein von einem Crash-Sensor erzeugtes Sensorsignal einer Auslöseeinrichtung und einer ein Freigabesignal liefernden Freigabeeinrichtung zugeführt wird, in der das Sensorsignal integriert und einer Prüfung unterzogen wird,

Ein derartiges Verfahren ist aus der GB-2310303 A bekannt. Dabei wird das Ausgangssignal eines einzigen Sensors durch verschiedene Algorithmen geprüft. Wenn nun der eine Sensor fehlerhafte Signale liefert, sollen diese als fehlerhaft erkannt werden. Die Wirkungsweise der Freigabeeinrichtung ist also vom Ausgangssignal abhängig. Wenn die fehlerhaften Signale den Signalen ähnlich sehen, die typisch für einen Crash sind, ist die Unterscheidung nicht mehr möglich. Damit aber kann die Freigabeeinrichtung unwirksam werden. Ein typischer Fall für ein nicht oder zumindest nicht mit ausreichender Sicherheit zu erkennendes Ausgangssignal ist das eines Sensors mit einer "kalten" Lötstelle. Diese besitzt einen leicht erhöhten bzw. fluktuierenden Widerstand. Bei einer das Fahrzeug stark beanspruchenden, an sich aber normalen Betriebsweise erzeugt der Sensor Signaturen, die von einem realen Crash nicht zu unterscheiden sind.

Der Erfindung liegt die Aufgabe zugrunde, ein Verfahren der eingangs genannten Art zu schaffen, das eine sichere und zuverlässige Wirkungsweise der Freigabeeinrichtung aufweist.

Die Erfindung löst diese Aufgabe durch die im Patentanspruch 1 angegebenen Merkmale.

Die Wirkungsweise der Freigabeeinrichtung ist nunmehr von mindestens einem weiteren Crash-Sensor abhängig. Da mit größtmöglicher Wahrscheinlichkeit mindestens ein Sensor zuverlässig arbeitet, kann mit Hilfe dieser Referenz ein fehlerhafter zweiter Sensor sicher erkannt und erreicht werden, dass sich dieser Fehler nicht in einer Fehlauslösung eines Rückhaltemittels bemerkbar macht.

Vorteilhafte Ausgestaltungen der Erfindung sind in den weiteren Patentansprüchen beschrieben und werden im Folgenden weiter erläutert.

Zum Auslösen eines Fahrzeuginsassen-Rückhaltemittels, wie Airbag, Gurtstraffer, Überrollbügel usw. ist die Freigabe durch einen Safing-Algorithmus notwendig. Eingangsgrößen sind die Werte eines Beschleunigungssensors im Fahrzeugzentrum in X- und Y-Richtung, (X=Richtung der Fahrzeuglängsachse, Y=Richtung quer dazu), ferner die Werte von Beschleunigungssensoren in den A-Säulen links (=L) und rechts (=R) und in X-Richtung sowie die Werte von Beschleunigungssensoren in den B-Säulen links und rechts in y-Richtung. Die Sensoren sind nicht dargestellt.

Erfindungsgemäß wird in einer ebenfalls nicht dargestellten Freigabeeinrichtung der (kinetische) Energieeintrag berechnet. Dabei wird zwischen horizontaler (=X) und lateraler (=Y) Energie unterschieden. Zur Bestimmung der Energiewerte werden zwei Integrale I berechnet, einmal in horizontaler Richtung und einmal in lateraler Richtung.

Die Berechnung der Integrale Ix,y beginnt zum Zeitpunkt tx,y, sobald der Betrag eines Beschleunigungswertes |ax,y| jeweils eine vorgegebene Schwelle überschritten hat. Die Schwellen liegen deutlich oberhalb des Rauschbandes und werden im normalen Fahrbetrieb auf ebener Straße nicht erreicht. Sinken die Beschleunigungswerte wieder und liegen sie alle unterhalb ihrer Schwellwerte, wird die Berechnung abgebrochen und der Wert des Integrals zurückgesetzt.

Die Integrale I werden ebenfalls zurückgesetzt, wenn nur ein Beschleunigungssensor seinen Schwellwert innerhalb eines vorgegebenen Zeitfensters überschreitet.

Das Zeitfenster wird initiiert, wenn das Ausgangssignal des Beschleunigungssensors den Schwellwert erreicht.

Zur weiteren Erläuterung wird die Erzeugung eines Freigabesignals im Falle eines Frontcrashes beschrieben. Der Fall eines Seitencrashes ist in entsprechender Weise zu behandeln.

Zur Erzeugung eines Freigabesignals im Falle eines Frontcrashes müssen 3 Bedingungen innerhalb eines parametrisierbaren Zeitraums erfüllt sein.
1. Das Integral lx muss einen Schwellwert J überschreiten: lx > Jx
2. Der Betrag eines 1. Beschleunigungssensors muss die zugehörige Schwelle überschreiten:
   |ax (SFZ)|> Sx (SFZ) oder |ax (SASL)|> Sx (SASL) oder |ax (SASR)|> Sx (SASR)
3. Der Betrag eines 2. Beschleunigungssensor muss die zugehörige Schwelle überschreiten.

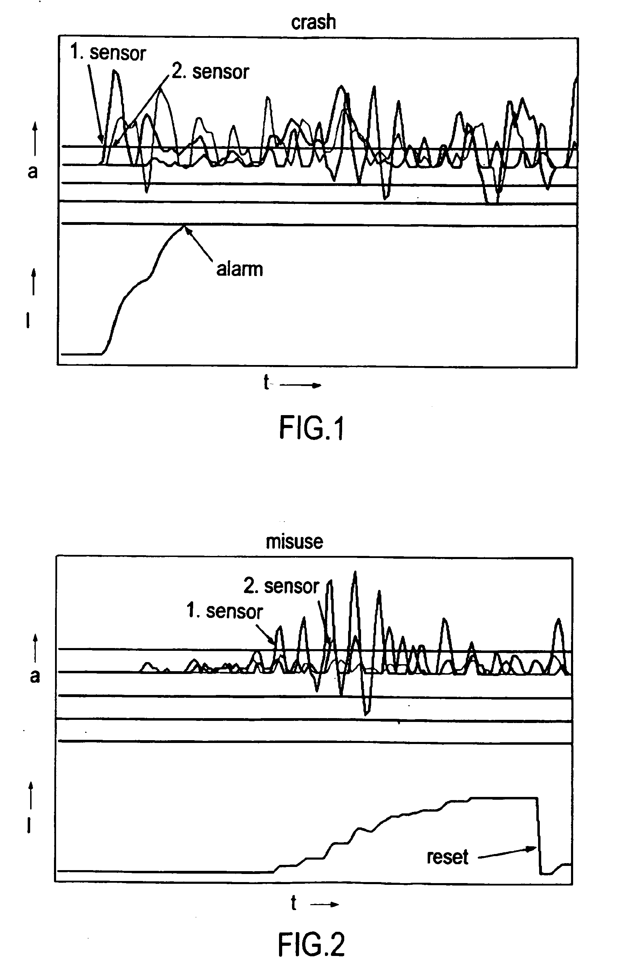

Die in den Figuren 1 bis 3 dargestellten Signalverläufe dienen zur Erläuterung der Arbeitsweise der Freigabeeinrichtung in unterschiedlichen Situationen.

Fig. 1 zeigt den Signalverlauf bei einem Frontcrash. Dabei werden alle 3 Bedingungen erfüllt und das Freigabesignal geliefert.
Oben: Beschleunigung ax von A-Säule links, rechts und am Tunnel vs. Zeit t. Die waagrechte Linie markiert den Beschleunigungsschwellwert Sx. Im Beispiel sind die Schwellwerte gleich Sx(SFZ) = Sx(SASL) = Sx(SASR). Unten: Beschleunigungsintegral Ix vs. Zeit t. Auch hier stellt die waagrechte Linie den Schwellwert Jx dar. Nach Überschreiten der Beschleunigungsschwelle durch 2 Sensoren und überschreiten der Integralschwelle wird das Freigabesignal erzeugt.

In Fig. 2 ist ein Misuse-Fall (atypische Beanspruchung des Fahrzeugs, beispielsweise durch eine Fahrt mit hoher Geschwindigkeit über eine Schlaglochstrecke), dargestellt. Das Freigabesignal wird nicht erzeugt, da die Integralschwelle Jx nicht überschritten wird. Der Energieeintrag ist nicht ausreichend.

Oben: Beschleunigung ax von A-Säule links, rechts und am Tunnel und die Schwellwerte Sx(SFZ) = Sx(SASL) = Sx(SASR) vs. Zeit t. Unten: Beschleunigungsintegral Ix und Schwellwert Jx vs. Zeit t. Die Integralschwelle wird nicht überschritten und der Alarm nicht gesetzt, das Integral wird zurückgesetzt.

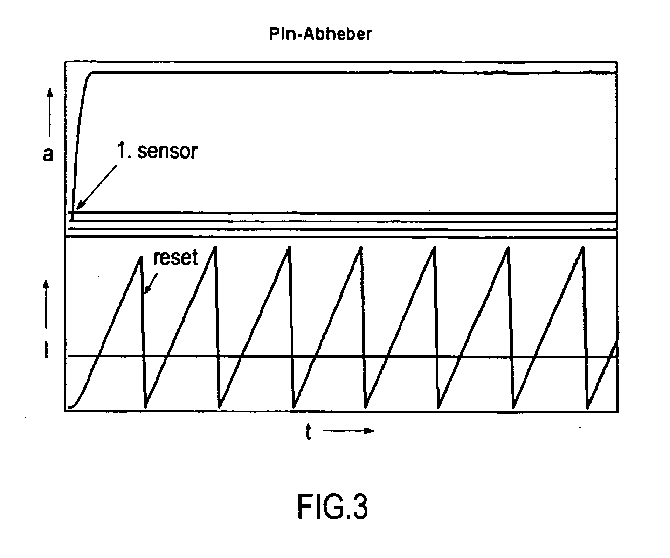

In Fig. 3 ist die Fehlfunktion eines Sensors gezeigt. Der Sensor springt von a = 0 auf einen hohen Beschleunigungswert. Diese Signatur könnte beispielsweise durch das Abheben eines Pins entstehen. Die Integralschwelle und eine Beschleunigungsschwelle werden erreicht, aber das Überschreiten einer 2. Beschleunigungsschwelle fehlt. Daher wird auch in diesem Fall das Freigabesignal nicht erzeugt.
Oben: ax(SASL) = ax(SASL) und am Tunnel und die Schwellwerte Sx(SFZ) = Sx(SASL) = Sx(SASR) vs. Zeit t. Unten Beschleunigungsintegral v vs. Zeit. Unten: Beschleunigungsintegral Ix und Schwellwert Jx vs. Zeit t. Da die Beschleunigungsschwelle nur durch einen Sensor überschritten wird, wird kein Alarm gesetzt.

Auf diese Weise kann weder bei einem Misuse, noch bei einem Sensorfehler ein Freigabesignal erzeugt werden

## Patentansprüche

1. Verfahren zum Auslösen eines Fahrzeuginsassen-Rückhaltemittels, bei dem ein von einem Crash-Sensor erzeugtes Sensorsignal einer Auslöseeinrichtung und einer ein Freigabesignal liefernden Freigabeeinrichtung zugeführt wird, in der das Sensorsignal integriert und einem Prüfalgorithmus unterzogen wird, **dadurch gekennzeichnet, dass** der Freigabeeinrichtung das Ausgangssignal mindestens eines weiteren Crash-Sensors zugeführt wird, dass die beiden Ausgangssignale miteinander verkettet und anschließend während eines Beobachtungszeitraums integriert werden und dass das Freigabesignal erzeugt wird, wenn
das Integral einen Schwellwert übersteigt, und wenn
das Ausgangssignal des weiteren Crash-Sensors ebenfalls einen zugehörigen Schwellwert innerhalb des Beobachtungszeitraums übersteigt,
wobei der Beobachtungszeitraum initiiert wird, wenn das Ausgangssignal eines der Crash-Sensoren einen zugehörigen Schwellwert überschreitet.

2. Verfahren nach Anspruch 1, **dadurch gekennzeichnet, dass** der Wert des Integrals auf den Wert 0 zurückgesetzt wird, wenn eines der Sensorsignale während des Beobachtungszeitraums den Schwellwert nicht erreicht.

## Claims

1. A method of triggering a vehicle occupant restraint means, wherein a signal generated by a crash sensor is supplied to a triggering device and to an enabling device which gives an enabling signal and in which the sensor signal is integrated and subjected to a test algorithm, **characterised in that** the enabling device is supplied with the output signal from at least one additional crash sensor, the two output signals are linked together and subsequently integrated during an observation period, and the enabling signal is generated if
the integral exceeds a threshold value and if
the output signal from the other crash sensor likewise exceeds an associated threshold value during the observation period,
wherein the observation period is initiated when the output signal from one of the crash sensors exceeds an associated threshold value.

2. A method according to claim 1, **characterised in that** the value of the integral is reset at zero if one of the sensor signals does not reach the threshold value during the observation period.

## Revendications

1. Procédé de déclenchement d'un moyen de retenue des occupants d'un véhicule, selon lequel un signal de capteur généré par un capteur de collision est envoyé à un dispositif de déclenchement et à un dispositif d'autorisation délivrant un signal d'autorisation, dans lequel le signal de capteur est intégré et soumis à un algorithme de contrôle,
**caractérisé en ce qu'**
on envoie le signal de sortie d'au moins un autre capteur de collision au dispositif d'autorisation, on combine les deux signaux de sortie l'un à l'autre, et on les intégre finalement pendant une période d'observation, et le signal d'autorisation est généré lorsque l'intégrale dépasse une valeur seuil et lorsque le signal de sortie de l'autre capteur de collision dépasse également une valeur seuil correspondante dans la période d'observation, la période d'observation étant initiée lorsque le signal de sortie de l'un des capteurs de collision dépasse une valeur seuil correspondante.

2. Procédé selon la revendication 1,
**caractérisé en ce que**
la valeur de l'intégrale est ramenée à la valeur 0 lorsque l'un des signaux de capteur n'atteint pas la valeur seuil pendant la période d'observation.
